(19) Europäisches Patentamt
European Patent Office
Office européen des brevets

(11) **EP 3 319 094 A1**

(12) **EUROPÄISCHE PATENTANMELDUNG**

(43) Veröffentlichungstag:
**09.05.2018   Patentblatt 2018/19**

(51) Int Cl.:
*H01F 7/18* (2006.01)      *H01F 7/122* (2006.01)
*F16D 55/02* (2006.01)     *F16D 63/00* (2006.01)
*H01F 7/16* (2006.01)

(21) Anmeldenummer: **17194676.7**

(22) Anmeldetag: **04.10.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **08.11.2016   DE 102016121327**

(71) Anmelder: **Bühler Motor GmbH**
**90459 Nürnberg (DE)**

(72) Erfinder:
• **RICHTER, Olaf**
  **90547 Stein (DE)**
• **KIRCHGEßNER, Daniel**
  **97222 Rimpar (DE)**

(54) **VORRICHTUNG UND VERFAHREN ZUM STEUERN EINES ELEKTROMAGNETISCHEN AKTUATORS, INSBESONDERE EINER HALTEBREMSE, SOWIE EIN COMPUTER-LESBARES MEDIUM**

(57)    Die vorliegende Erfindung betrifft eine Vorrichtung zum Steuern eines elektromagnetischen Aktuators, insbesondere einer elektromagnetischen Haltebremse, wobei der Aktuator einen ferromagnetischen Anker, einen Stator, einen Permanentmagneten zum Erzeugen eines ersten Magnetfelds und mindestens eine Spule zum Erzeugen eines zweiten Magnetfelds aufweist und der Anker durch das erste Magnetfeld zum Stator bewegbar und reibschlüssig verbindbar bzw. arretierbar ist, wobei die mindestens eine Spule derart ausgebildet und/oder angeordnet ist, die Richtung des zweiten Magnetfelds entgegen der Richtung des ersten Magnetfelds auszubilden, um den Anker vom Stator zu lösen.

Mit dem Ziel, das Lösen und Arretieren des Aktuators bzw. der Bremse akustisch zu optimieren bzw. leiser zu gestalten, ist die Vorrichtung derart ausgebildet, ein pulsweitenmoduliertes Steuersignal für die mindestens eine Spule zum Steuern des Aktuators zu erzeugen und derart zu modulieren, dass der Impuls, insbesondere die Geschwindigkeit, des Ankers beim Auftreffen auf und/oder beim Lösen vom Stator minimiert wird.

Zusätzlich werden ein Verfahren, ein computer-lesbares Medium sowie eine Einrichtung für die oben genannte Steuerung bereitgestellt.

Fig. 7

EP 3 319 094 A1

**Beschreibung**

Die Erfindung betrifft eine Vorrichtung und ein Verfahren zum Steuern eines elektromagnetischen Aktuators, insbesondere einer Haltebremse, sowie ein computer-lesbares Medium.

Aus der Praxis sind elektromagnetische Aktuatoren bekannt, die eine Arretierung des Aktuators ermöglichen. Lediglich beispielhaft seien Sitzaktuatorsysteme im Bereich der Aviation genannt, bei welchen es erforderlich ist, den Sitz über den Aktuator zu arretieren. Andere Anwendungsbereiche solcher Aktuatoren finden sich im Bereich der Aufzugstechnik, beispielsweise für die Betätigung der Aufzugtüren.

Im Allgemeinen wird die Arretierung eines Aktuators üblicherweise mit Hilfe einer sog. permanentmagnetischen Bremse realisiert. Eine derartige Bremse weist einen bewegbaren Anker aus ferromagnetischem Material, einen Stator mit einer Spule und einen Permanentmagneten auf, wobei der Anker mittels der Magnetkraft es Permanentmagneten gezogen und somit arretiert wird. Dieser Bremsentyp, insbesondere die Spule, wird mit elektrischer Spannung versorgt, sobald der Sitz verstellt werden soll, um die Bremse zu lösen. Dabei erzeugt die Spule ein Magnetfeld, das gegenüber dem Magnetfeld des Dauermagneten entgegengesetzt wirkt. Die Magnetkraft der Spule ist so stark, dass die Federkraft, die den Anker auf den Stator drückt, überwunden wird und so der Anker vom Stator gelöst wird. Dieser Schaltvorgang wird von einem Mikrocontroller durchgeführt, der einen digitalen Ausgang aufweist und die Bremse steuert. Bei einem digitalen Ausgang wird ein Signal erzeugt, das nur zwei vorbestimmte Werte annehmen kann. Diese Werte werden durch eine aktivierte und eine abgeschaltete Spannungsversorgung bestimmt, wie z. B. 0V und 5V oder 0V und 12V.

Bei den Schaltvorgängen der Bremse (Lösen/Arretieren) entsteht ein deutliches, klackendes Geräusch, das durch den Aufprall des Ankers auf den entsprechenden Gegenpart des Aktuators entsteht. Dieses Geräusch kann insbesondere in stillen Umgebungen oder bei vielen gleichzeitigen Betätigungen der Bremse als störend empfunden werden.

Als Stand der Technik ist die Druckschrift DE 699 12 877 T2 mit dem Titel "Verfahren zur Regelung der Geschwindigkeit eines Ankers in einem elektromagnetischem Aktuator" bekannt. Diese Druckschrift bezieht sich auf einen elektromagnetischen Aktuator für Hochgeschwindigkeitsanwendungen mit hoher Kraft und insbesondere auf ein elektromagnetisches Stellglied zum Öffnen und Schließen eines Ventils eines Verbrennungsmotors, wobei eine Geschwindigkeit des Ankers beim Landen gegen einen Statorkern des Aktuators gesteuert wird.

Die Aufgabe der vorliegenden Erfindung besteht darin, die insbesondere im Bereich der Aviation eingesetzten permanentmagnetischen Bremsen akustisch zu optimieren.

Die Erfindung stellt zu dessen Lösung eine Vorrichtung zum Steuern eines elektromagnetischen Aktuators, insbesondere einer elektromagnetischen Haltebremse, bereit, wobei der Aktuator einen ferromagnetischen Anker, einen Stator, einen Permanentmagneten zum Erzeugen eines ersten Magnetfelds und mindestens eine Spule zum Erzeugen eines zweiten Magnetfelds aufweist und der Anker durch das erste Magnetfeld zum Stator bewegbar und reibschlüssig verbindbar bzw. arretierbar ist, wobei die mindestens eine Spule derart ausgebildet und/oder angeordnet ist, die Richtung des zweiten Magnetfelds entgegen der Richtung des ersten Magnetfelds auszubilden, um den Anker vom Stator zu lösen. Hierbei ist die Vorrichtung derart ausgebildet, ein pulsweitenmoduliertes Steuersignal (PWM-Signal) für die mindestens eine Spule zum Steuern des Aktuators zu erzeugen und derart zu modulieren, dass der Impuls, insbesondere die Geschwindigkeit, des Ankers beim Auftreffen auf und/oder beim Lösen vom Stator minimiert wird.

Der Kern der Erfindung liegt darin, die Akustik des Aktuators, insbesondere der Haltebremse, durch eine Vorrichtung oder eine Steuersoftware bzw. ein Steuer-Computerprogramm zu verbessern. Daraus ergibt sich der Vorteil, dass keine Änderung an einer bestehenden Bremse erforderlich ist. Somit wird verhindert, dass eine neue Bremse entwickelt werden muss, bei der das Risiko besteht, dass das Akustikproblem nur mit hohen Kosten für das Bauteil und/oder Bauraumverletzung gelöst werden kann. Weiterhin entstehen keine Aufwände für eine Neuentwicklung der Bremse an sich. Darüber hinaus ist es technisch möglich, die Software auf sich bereits im Feld befindliche Aktuatoren aufzuspielen und die Funktionalität einer leisen Bremse nachzurüsten, ohne dass mechanische Änderungen an Bauteilen erforderlich sind.

Vorzugsweise ist die Vorrichtung derart ausgebildet, das Steuersignal mit einem vorbestimmten Modulationsmuster und/oder abhängig von einer gemessenen Stromstärke in der mindestens einen Spule zu modulieren und den Tastgrad des Steuersignals vor dem Auftreffen des Ankers auf den Stator zu reduzieren und/oder vor dem Lösen des Ankers vom Stator zu erhöhen mit dem Ziel, die Auftreff- bzw. Lösegeschwindigkeit zu minimieren und/oder auf null zu reduzieren. Der Tastgrad oder Ansteuergrad (engl. "duty cycle" oder "duty factor") definiert das Verhältnis von aktivierter Spannungsversorgung des digitalen Ausgangs innerhalb einer Periodendauer bzw. eine Impulsdauer im Verhältnis zu einer Periodendauer. Der Tastgrad liegt zwischen 1 und 0 bzw. zwischen 100% und 0%.

Des Weiteren hat es sich als vorteilhaft herausgestellt, wenn die Vorrichtung derart ausgebildet ist, ein vorbestimmtes Steuersignal abhängig von den Kenndaten des Aktuators zu erzeugen. Hierbei bildet die Vorrichtung ein gesteuertes System für den Aktuator, das einfach herstell- und implementierbar ist. Auf diese Weise kann eine Strommessung vermieden werden.

Alternativ oder zusätzlich ist die Vorrichtung vorteilhafterweise derart ausgebildet, eine Veränderung einer Stromstärke in der mindestens einen Spule innerhalb einer Periodendauer des Steuersignals zu messen, abhängig von der Veränderung den Abstand zwischen Anker und Stator und die Geschwindigkeit des Ankers zu bestimmen und das Steuersignal abhängig von dem Abstand zwischen Anker und Stator und der Geschwindigkeit des Ankers zu modulieren. Hierbei bildet die Vorrichtung ein geregeltes System für den Aktuator, das im Vergleich zum gesteuerten System den Aktuator präziser steuert und somit bei der Geräuschvermeidung effektiver ist.

Des Weiteren ist alternativ oder zusätzlich die Vorrichtung vorzugsweise derart ausgebildet, nach einem Abschalten des Steuersignals zuerst eine sinkende Stromstärke und eine nachfolgende steigende Stromstärke in der mindestens einen Spule zu messen, ab einem Zeitpunkt A der gemessenen steigenden Stromstärke das Steuersignal mit einem maximal möglichen Tastgrad solange zu erzeugen, bis die Stromstärke konstant ist oder sinkt, und ab einem Zeitpunkt B der gemessenen konstanten bzw. sinkenden Stromstärke den Tastgrad des Steuersignals zu reduzieren. Hierbei bildet die Vorrichtung ein getriggert-geregeltes System für den Aktuator, das im Vergleich zum geregelten System den Aktuator noch genauer steuert und somit bei der Geräuschvermeidung effektiver ist. Außerdem sind im Vergleich zu einem geregelten System einerseits die zur Informationsverarbeitung erforderliche Rechenleistung und anderseits die Anforderung an die Güte bzw. Qualität der Strommessung geringer.

Es hat sich ebenfalls als vorteilhaft herausgestellt, wenn die Vorrichtung derart ausgebildet ist, nach dem Zeitpunkt B eine erneut steigende Stromstärke zu messen und die Schritte ab dem Zeitpunkt A und B zu wiederholen.

Vorzugsweise ist die Vorrichtung derart ausgebildet, nach einem Erzeugen des Steuersignals zuerst eine steigende Stromstärke und eine nachfolgende sinkende Stromstärke in der mindestens einen Spule zu messen, ab einem Zeitpunkt C der gemessenen sinkenden Stromstärke das Steuersignal mit einem minimal möglichen Tastgrad solange zu erzeugen, bis die Stromstärke konstant ist oder steigt, und ab einem Zeitpunkt D der gemessenen konstanten bzw. steigenden Stromstärke den Tastgrad des Steuersignals zu erhöhen.

Es hat sich ebenfalls als vorteilhaft herausgestellt, wenn die Vorrichtung derart ausgebildet ist, nach dem Zeitpunkt D eine erneut sinkende Stromstärke zu messen und die Schritte ab dem Zeitpunkt C und D zu wiederholen.

Des Weiteren kann die Vorrichtung einen oder zwei MOSFETs zum Erzeugen des Steuersignals, insbesondere eine H-Brücke aus höchstens vier MOSFETs, aufweisen.

Es wird ebenfalls ein Verfahren zum Steuern eines elektromagnetischen Aktuators, insbesondere einer elektromagnetischen Haltebremse, bereit gestellt, wobei der Aktuator einen ferromagnetischen Anker, einen Stator, einen Permanentmagneten zum Erzeugen eines ersten Magnetfelds und mindestens eine Spule zum Erzeugen eines zweiten Magnetfelds aufweist und der Anker durch das erste Magnetfeld zum Stator bewegbar und reibschlüssig verbindbar bzw. arretierbar ist, wobei die mindestens eine Spule derart ausgebildet und/oder angeordnet ist, die Richtung des zweiten Magnetfelds entgegen der Richtung des ersten Magnetfelds auszubilden, um den Anker vom Stator zu lösen, gekennzeichnet durch den folgenden Schritt:

- Erzeugen und Modulieren eines pulsweitenmodulierten Steuersignals für die mindestens eine Spule zum Steuern des Aktuators, wobei das Steuersignal ein Modulationsmuster aufweist, das den Impuls, insbesondere die Geschwindigkeit, des Ankers beim Auftreffen auf und/oder beim Lösen vom Stator minimiert.

Vorteilhafterweise ist das Verfahren durch folgende Schritte gekennzeichnet:

- Modulieren des Steuersignals mit einem vorbestimmten Modulationsmuster und/oder abhängig von einer gemessenen Stromstärke in der mindestens einen Spule,
- Reduzieren des Tastgrads des Steuersignals vor dem Auftreffen des Ankers auf den Stator und/oder
- Erhöhen des Tastgrads des Steuersignals vor dem Lösen des Ankers vom Stator.

Als gesteuertes Verfahren bezeichnet, hat sich folgender Schritt als vorteilhaft für das Verfahren herausgestellt:

- Erzeugen eines vorbestimmten Steuersignals abhängig von den Kenndaten des Aktuators.

Als geregeltes Verfahren bezeichnet, haben sich folgende Schritte als vorteilhaft für das Verfahren herausgestellt:

- Messen einer Veränderung einer Stromstärke in der mindestens einen Spule innerhalb einer Periodendauer des Steuersignals,
- Bestimmen eines Abstand zwischen Anker und Stator und einer Geschwindigkeit des Ankers abhängig von der Veränderung, und
- Modulieren des Steuersignals abhängig von dem Abstand zwischen Anker und Stator und der Geschwindigkeit des Ankers.

In einem trigger-geregeltem Verfahren sind beim Arretieren des Ankers folgende Schritte für das Verfahren von Vorteil:

a) Abschalten des Steuersignals,

b) Messen einer sinkenden Stromstärke und einer nachfolgenden steigenden Stromstärke in der mindestens einen Spule,

c) ab einem Zeitpunkt A der gemessenen steigenden Stromstärke, Erzeugen des Steuersignals mit einem maximal möglichen Tastgrad, bis die gemessene Stromstärke konstant ist oder sinkt,

d) ab einem Zeitpunkt B der gemessenen konstanten bzw. sinkenden Stromstärke, Reduzieren des Tastgrads des Steuersignals, und

e) Wiederholen der Schritte b) bis d)

In einem trigger-geregeltem Verfahren sind beim Lösen des Ankers folgende Schritte für das Verfahren von Vorteil:

a) Erzeugen des Steuersignals,

b) Messen einer steigenden Stromstärke und einer nachfolgenden sinkenden Stromstärke in der mindestens einen Spule,

c) ab einem Zeitpunkt C der gemessenen sinkenden Stromstärke, Erzeugen des Steuersignals mit einem minimal möglichen Tastgrad, bis die gemessene Stromstärke konstant ist oder steigt,

d) ab einem Zeitpunkt D der gemessenen konstanten bzw. steigenden Stromstärke, Erhöhen des Tastgrads des Steuersignals, und

e) Wiederholen der Schritte b) bis d)

Die Erfindung stellt des Weiteren ein Computer-lesbares Medium mit einem Programmcode bereit, der derart angepasst ist, alle Verfahrensschritte nach einem der Verfahrensansprüche durchzuführen, wenn der Programmcode auf einem Computer ausgeführt wird. Unter computer-lesbares Medium sind CDs, wiederbeschreibbare Speicherchips, Disketten, Festplatten, DVDs, etc. zu verstehen.

Ebenso wird eine erfindungsgemäße Einrichtung mit Mitteln zur Durchführung der Schritte des erfindungsgemäßen Verfahrens bereitgestellt. Die Einrichtung ist vorzugsweise als ein eingebettetes System (engl. "embedded system") oder als eine eingebettete elektronische Schaltung ausgebildet. Der Begriff "eingebettete/s System/Schaltung" bezeichnet einen elektronischen Rechner oder auch Computer oder elektronische Schaltung in Form eines Logikchips, der in einen technischen Kontext eingebunden (eingebettet) ist. Dabei übernimmt der Rechner entweder Überwachungs-, Steuerungs- oder Regelfunktionen oder ist für eine Form der Daten- bzw. Signalverarbeitung zuständig. Das eingebettete System ist hierbei speziell an die Aufgabe der Regelung bzw. Steuerung des PWM-Signals angepasst. Aus Kostengründen ist eine optimierte, gemischte Hardware-Software-Implementierung vorteilhaft. Die, insbesondere als eingebettetes System oder eingebettete elektronische Schaltung ausgebildete, Einrichtung mit Mitteln zur Durchführung des erfindungsgemäßen Verfahrens eignet sich nicht nur zur Ansteuerung der Bremse, sondern kann auch zur Steuerung des Motors eingesetzt werden.

Vorteilhafterweise wird bei den zuvor genannten erfindungsgemäßen Ausführungsformen die Lagervorspannung des Motors und dessen Größe beim Erzeugen und Modulieren des pulsweitenmodulierten Steuersignals berücksichtigt. Die Lagervorspannung agiert hierbei als Rückstellkraft für den Anker der Bremse. Alternativ oder zusätzlich kann der Anker selbst eine Rückstellfeder aufweisen, die den Anker in eine vorbestimmte Ausgangsposition versetzt, wenn die Spule der Bremse nicht angesteuert wird.

Die nachfolgende Beschreibung bezieht sich auf die beiliegenden Zeichnungen von bevorzugten Ausführungsbeispielen und erläutert weitere Merkmale und Vorteile der Erfindung.

Es zeigen

Fig. 1 eine Explosionsansicht auf ein System mit einem Elektromotor und einer Haltebremse;

Fig. 2 eine Frontalansicht auf das System aus Fig. 1;

Fig. 3 eine Querschnittsansicht auf das System aus Fig. 2;

Fig. 4 eine Querschnittsansicht auf die Haltebremse aus dem System aus Fig. 2;

Fig. 5 ein Signaldiagramm mit einem Spannungs- und Stromverlaufs innerhalb der Spule einer Haltebremse im Idealzustand;

Fig. 6 ein Signaldiagramm einer ungesteuerten und ungeregelten Haltebremse beim Abschaltvorgang;

Fig. 7 ein Signaldiagramm einer trigger-geregelten Haltebremse beim Abschaltvorgang; und

Fig. 8 eine Prinzipskizze einer schaltungstechnisch ausgebildeten H-Brücke zur Ansteuerung der Haltebremse.

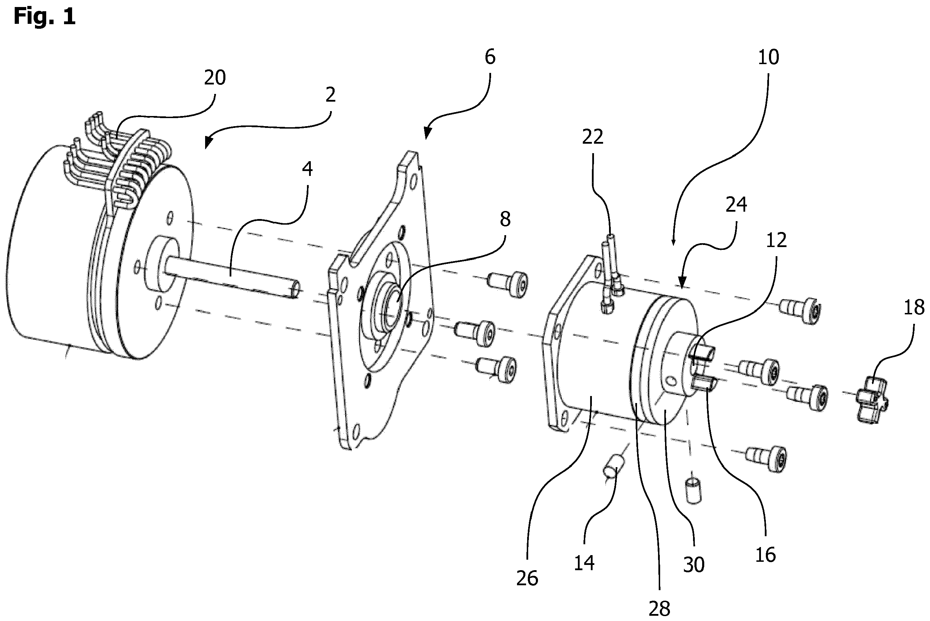

Fig. 1 zeigt eine Explosionsansicht auf ein System mit einem Elektromotor 2 und einer Haltebremse 10 (Aktuator), wobei die Haltebremse 10 mittels eines Befestigungsadapters 6 am Elektromotor 2 befestigt ist. Der Elektromotor 2 weist eine Drehwelle 4 auf, die mit einer Lagervorspannung in dem Motor 2 angeordnet und gelagert sein kann. Die Drehwelle 4 ist entlang ihrer Rotationsachse in bzw. aus dem Motor für zumindest eine bestimmte Strecke verschiebbar. Zur Steuerung des Motors 2 sind Strom/Signalkabel 20 vorgesehen, die Strom- und Steuersignale an den Motor 2 und Messsignale, wie z.B. Drehzahlmessung und Strom- und Spannungsmessung, vom Motor 2 zu einer Motorsteuerung (nicht dargestellt) übertragen. Der Befestigungsadapter 6 ist dazu ausgelegt, ein Bindeglied zwischen Elektromotor 2 und Haltebremse 10 zu bilden, da die Befestigungsmöglichkeiten des Motors 2 und der Bremse 10 nicht für einander bestimmt sind und somit nicht zum direkten Verbinden konfiguriert sind (siehe unterschiedliche Anordnung der Befestigungsschrauben). Ferner dient der Befestigungsadapter 6 dazu, den Motor 2 in einer entsprechenden Applikation, beispielsweise in einem Sitzaktuator oder in einer Aufzugtüre, zu fixieren.

Es existieren auch Systeme mit einem Elektromotor 2 und einer Haltebremse 10, die ohne Adapter direkt miteinander befestigt sind. Der Befestigungsadapter 6 weist eine Bohrung 8 auf, in der die Drehwelle 4 angeordnet, aber nicht gelagert ist und dessen Innenwand (der Bohrung 8) nicht mit der Drehwelle 4 in Berührung kommt. Die Haltebremse 10 weist ein zylinderförmiges Gehäuse 26 und einen zylinder- bzw. scheibenförmigen Kupplungsanker 24 auf, die im Wesentlichen zur Achse der Drehwelle 4 achsensymmetrisch sind. Die Haltebremse 10 weist einen Permanentmagneten 31, eine Spule 32 und eine Feder 33 auf. Die Spule 32 wird über Strom/Signalkabel 22 angesteuert, wodurch entweder eine magnetische Anziehungskraft des Permanentmagneten 31 oder eine Federkraft der Feder 33 überwiegt und so der Kupplungsanker 24 angezogen und/oder abgestoßen wird. Der Kupplungsanker 24 weist eine Kupplungsscheibe 28 und eine Schwungscheibe 30 auf, die drehfest miteinander verbunden sind. Die Verbindung ist allerding so gestaltet, dass sich die Kupplungsscheibe 28 in längsaxialer Richtung, d.h. entlang der Rotationsachse der Drehwelle 4, relativ zur Schwungscheibe 30 bewegen kann. Die Kupplungsscheibe 28 ist vorzugsweise aus einem ferromagnetischen Material gebildet bzw. bildet eine ferromagnetische Bremsscheibe.

In der Schwungscheibe 30 ist eine Aufnahmebohrung 12 ausgebildet, in der die Drehwelle 4 mittels Arretierungsschrauben 14 befestigt ist. Dadurch wird ein Entlanggleiten der Scheibe 30 auf der Drehwelle 4 unterbunden. Um eine Drehung der Welle 4 und insbesondere deren Drehmoment stabiler auf die Schwungscheibe 30 zu übertragen, sind um die Bohrung 12 Kupplungsfortsätze 16 ausgebildet, die mit einem am Ende der Welle 4 ausgebildeten oder angeordneten Kupplungskreuz 18 in Eingriff kommen.

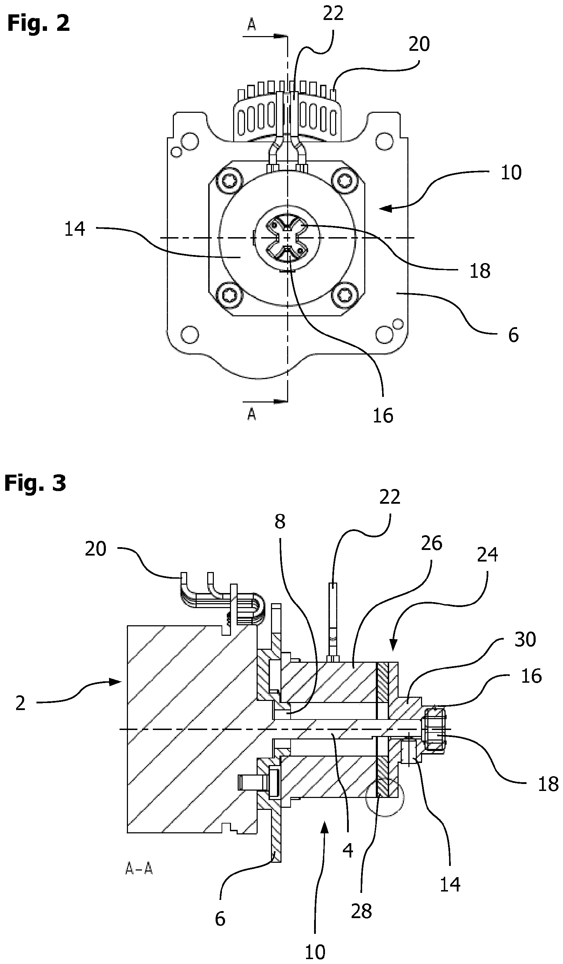

Fig. 2 und Fig. 3 zeigen eine Frontalansicht und eine Querschnittsansicht auf ein zusammengebautes System gemäß Fig. 1.

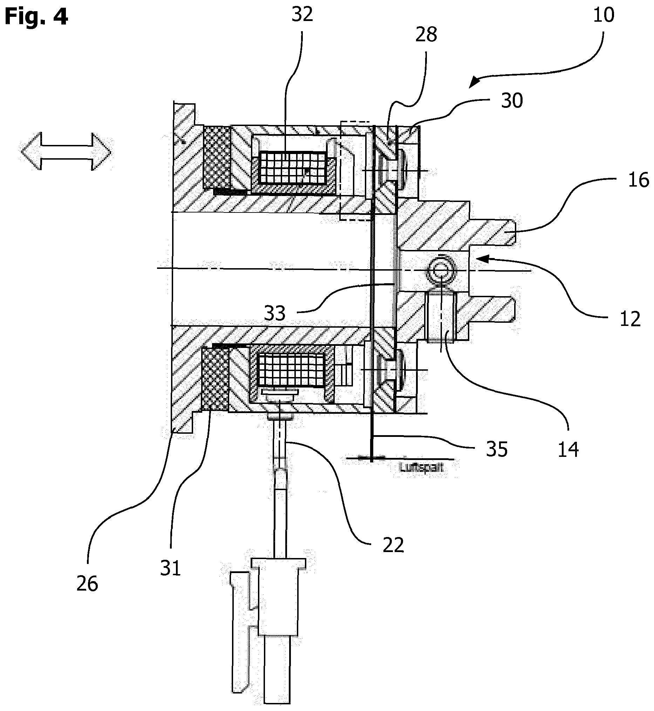

Fig. 4 zeigt eine Querschnittsansicht auf die Haltebremse 10 aus dem System aus Fig. 2 bzw. Fig. 3. Neben den zuvor genannten Merkmalen der Haltebremse ist die Spule 32 innerhalb des Gehäuses 26 dargestellt, die über die Signalkabel 22 gesteuert wird. Benachbart zu der Spule 32 ist in dem Gehäuse 26 der Permanentmagnet 31 angeordnet. Die Kupplungsscheibe 28 ist mittels Nieten oder Schrauben mit der Schwungscheibe 30 drehfest, jedoch längsaxial beweglich, verbunden. Zwischen der Kupplungsscheibe 28 und der Schwungscheibe ist eine Feder 33, insbesondere eine Wellfeder, angeordnet.

Im Grundzustand, d.h. im gebremsten Zustand der Haltebremse 10, bewirkt das Magnetfeld des Permanentmagneten 31 gemeinsam mit der Federkraft der Feder 33, dass die Kupplungsscheibe 28 reibschlüssig an dem Gehäuse 26 anliegt. Die Feder 33 drückt dabei die Kupplungsscheibe 28 von der Schwungscheibe 30 weg.

Die Verbindung, insbesondere Nietverbindung, zwischen der Kupplungsscheibe 28 und der Schwungscheibe 30 ist so gestaltet, dass die Kupplungsscheibe 28 eine am Gehäuse 26 anliegenden, gebremsten Position und eine an der Schwungscheibe 30 anliegenden, gelösten Position einnehmen kann. Die in der gebremsten Position auftretende Reibungskraft oder Haftkraft ist stark genug, um eine Drehung/Rotation des Kupplungsankers 24 und somit der Drehwelle 4 zu stoppen bzw. zu unterbinden.

Die Spule 32 ist derart ausgebildet, ein zur Achse der Drehwelle 4 achsensymmetrisches Magnetfeld zu erzeugen. Durch einen geregelten oder gesteuerten Stromfluss durch die Spule 32 kommt es zu einer entsprechenden Nord-Südpol Ausrichtung des Magnetfelds der Spule 32 (siehe Doppelpfeil links neben der Querschnittsansicht). Das Magnetfeld der Spule 32 wirkt dabei dem Magnetfeld des Permanentmagneten 31 entgegen. Das Magnetfeld der Spule 32 ist so konfiguriert, dass es eine abstoßende Kraft auf die ferromagnetische Kupplungsscheibe 28 ausübt, die die Federkraft der Feder 33 übersteigt. Auf diese Weise wird die Kupplungsscheibe 28 von dem Gehäuse 26 weg und an die Schwungscheibe 30 gedrückt. Die Kupplungsscheibe 28 nimmt folglich die gelöste Position ein, so dass der Kupplungsanker 24 und die Drehwelle 4 frei rotieren können. Die Haltebremse 10 ist damit gelöst.

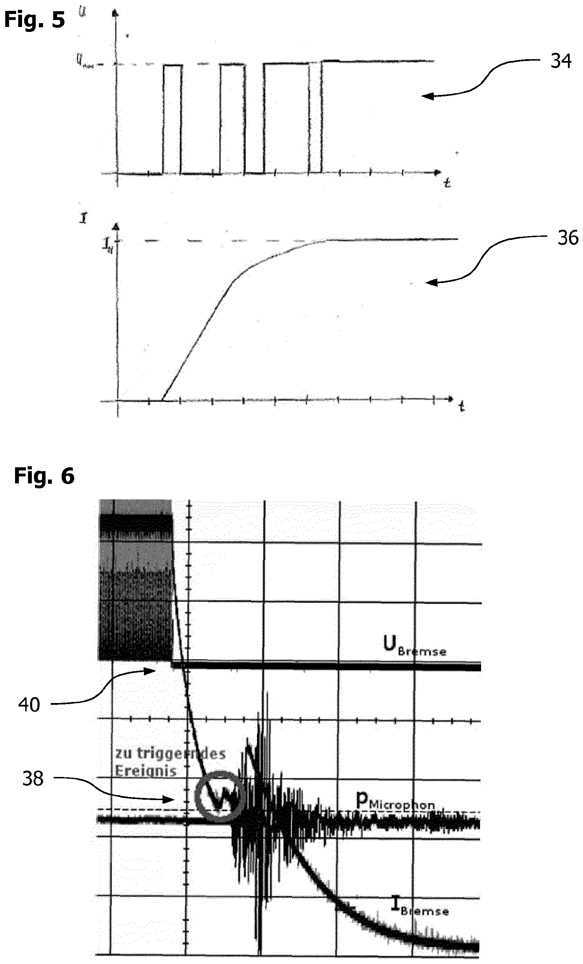

Fig. 5 zeigt ein Signaldiagramm mit einem Spannungs- und Stromverlaufs, wobei die Spule 32 einer Haltebremse 10 mit einem modulierten PWM-Signal 34 angesteuert wird. Dadurch fließt in der Spule 32 ein Effektivstrom 36. Die Ansteuerung der Bremse erfolgt per Software oder einer entsprechend ausgebildeten Steuervorrichtung.

Der Spulenstrom korreliert mit der der Magnetkraft, welche in die Beschleunigung a eingeht. Die Beschleunigung a des Ankers im System, insbesondere des Aktuators bzw. der Haltebremse, lässt sich durch folgende Funktion beschreiben:

$$a = \frac{F_{feder}(d) + F_{magnet}(d, I_{spule})}{M_{magnet}}$$

Die Federkraft stellt eine Rückstellkraft dar, die die Bremse, abhängig von ihrer Struktur, ohne Stromversorgung entweder dauerhaft öffnet oder schließt. Diese Federkraft stammt von einer Lagervorspannung des Motors und/oder von einer Feder innerhalb der Bremse. Die Federkraft ist abhängig von der Ausdehnung bzw. Stauchung der Feder. Die Magnetkraft ist einerseits von dem das Magnetfeld erzeugenden Spulenstrom sowie dem Abstand zwischen der das Magnetfeld erzeugenden Spule und dem Kupplungsscheibe bzw. ferromagnetischer Bremsscheibe, insbesondere zwischen Stator und Anker, abhängig. Die Masse wird durch die Kupplungsscheibe, insbesondere die bewegbaren Massen wie Drehwelle, Kupplungsscheibe und Schwungscheibe, bestimmt.

Die Erfindung zielt auf eine Minimierung des Impulses beim Auftreffen der Kupplungsscheibe auf das Gehäuse bzw. die Schwungscheibe ab, ohne dabei die Zeitanforderung des Schaltvorgangs (z.B. t=50ms) zu verletzen, aber gleichzeitig ein sicheres und stabiles Öffnen und Schließen der Bremse zu ermöglichen.

Hierzu sind insbesondere folgende Systeme vorgesehen, die durch erfindungsgemäße Vorrichtungen, Verfahren, Programme und Einrichtungen realisiert werden:

a) Gesteuertes System

Es wird anhand von Kenndaten der Bremse und insbesondere durch empirische Versuche ein Pulsmuster, d.h. ein PWM-Signal, entwickelt, welches die Akustik minimiert. Dieses Pulsmuster wird immer beim Aktuieren, d.h. beim Lösen und/oder Arretieren, der Bremse aufgerufen und in Form eines Steuersignals an die Bremse, insbesondere die Spule, übertragen.

b) Geregeltes System

Ein geregeltes System wird dadurch realisiert, dass die Differenz des Spulenstroms innerhalb eines PWM-Zyklus gemessen wird. Der Spulenstrom ist ein Maß für den Abstand zwischen Permanentmagnet und Kupplungsscheibe und gleichzeitig eine von der Elektronik direkt messbare Größe.

Durch die Stromdifferenz lässt sich auch die Abstandsdifferenz und damit die Geschwindigkeit der Bewegung der Kupplung bestimmen. Bei unmittelbarer Annährung der Kupplungsscheibe an den Permanentmagneten bzw. das Gehäuse wird dann das Pulsmuster derart angepasst, dass die Stromänderung und damit die Abstandsänderung (bzw. Geschwindigkeit des Bremsankers) minimiert wird. Dadurch wird der Aufprall des Bremsankers auf den Bremsenstator leiser.

c) Getriggert-geregeltes System

Diese Variante ist vor allem für Bremsen geeignet, welche sich während des Schaltens instabil verhalten, d.h. durch den mechanischen Gesamtaufbau der Zustand zwischen geschlossener und geöffneter Bremse nicht stabil gehalten werden. Dies ist unter anderem bei Bremsen vom Typ KEB Combiperm der Fall. Eine konventionelle Stromregelung funktioniert hierbei nicht, da die Bremse entweder hart (ohne vermindertes Geräusch) oder gar nicht schalten würde. Der instabile Zustand ist jedoch am Stromverlauf der Bremse zu erkennen, indem sich der Stromgradient plötzlich ändert. Fig. 6 zeigt ein Signaldiagramm einer ungesteuerten und ungeregelten Haltebremse beim Abschaltvorgang. Hierbei wird an dem Punkt 40 eine Spannungs- bzw. Signalquelle von der Spule getrennt bzw. abgeschaltet, wodurch der Anker anfängt, sich auf den Stator zu zu beschleunigen. Kurz vor dem Auftreffen des Ankers auf den Stator und dem daraus resultierenden klackenden Geräusch erfolgt eine Schwankung im Stromfluss der Spule, der als Triggerereignis 38 definiert werden kann.

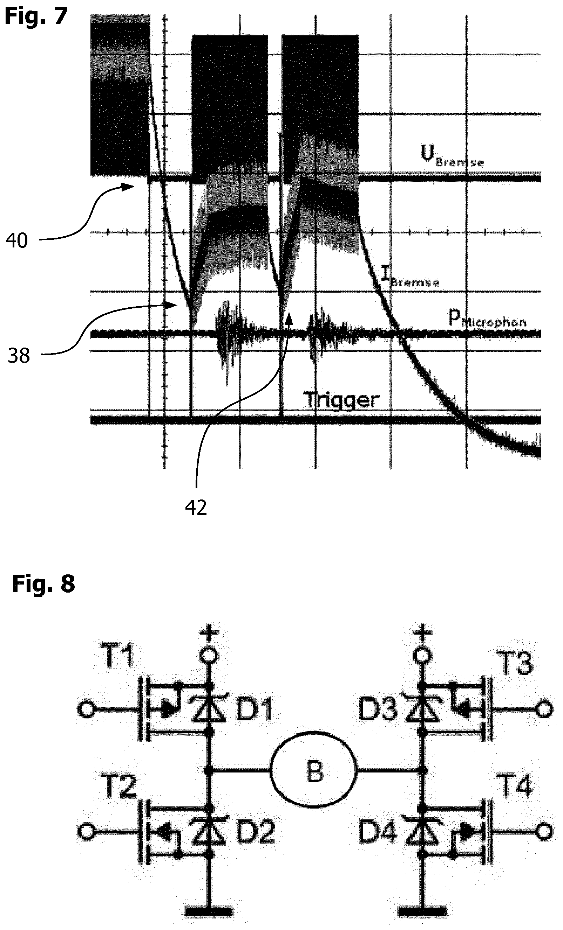

Auf diese plötzliche Änderung lässt sich ein Trigger setzen, der dazu führt, dass der Bremsenstrom geeignet geregelt wird. Beim Schließen der Bremse (d. h. die Bremsenspannung wird abgeschaltet) wird also ein steigender Spulenstrom detektiert. Dies setzt den Trigger in der Software, dass der Strom nun geregelt werden muss. Die Software steuert nun mit maximal möglichem PWM-Dutycycle die Bremse so lange an, bis der Strom konstant wird, dann verringert die Software den Dutycycle, so dass der Spulenstrom wieder fällt. Kommt es zu einem erneuten Anstieg des Spulenstroms, wird der Algorithmus erneut getriggert. Das Verhalten von Spannung (Stellgröße), Spulenstrom (Regelgröße), Trigger sowie der Messwert eines externen Mikrophons werden in Fig. 7 dargestellt. Hierum wird erneut die Spannung für die Spule an dem Punkt 40 abgeschaltet und an dem Punkt 38 eine Stromschwankung kurz vor dem Auftreffen des Ankers auf den Stator in der Spule gemessen. Daraufhin wird die Spule mit einem PWM-Signal versorgt und die Beschleunigung des Ankers abgebremst, u.U. sogar umgekehrt. Sobald die Stromschwankung vorbei ist, d.h. ein konstanter oder fallender Strom durch die Spule fließt, wird das PWM-Signal abgeschaltet. Sollte es dann erneut durch ein Auftreffen des Ankers auf den Stator zu einer Stromschwankung in der Spule kommen, werden die vorherigen Schritte zum Abbremsen des Ankers wiederholt. Diese Wiederholung kann solange stattfinden, bis die Stromschwankungen einen vorbestimmten Wert nicht mehr überschreiten oder vollständig ausbleiben.

Beim Öffnen der Bremse (d.h. Bremse wird bestromt) verhält sich der Algorithmus genau umgekehrt: Er triggert auf einen fallenden Spulenstrom und regelt dann wie zuvor beschrieben auf einen konstanten Strom, bis er diesen ansteigen lassen kann. Vergleicht man den Schallpegel zwischen Fig. 6 und 7, so ist festzustellen, dass mit der getriggert geregelten Methode dieser um ca. Faktor 4 (nach aktuellem Stand der Entwicklung) gesenkt werden kann.

Fig. 8 zeigt eine H-Brücke mit 4 MOSFETs, die in allen Fällen, d.h. gesteuertes, geregeltes oder getriggert-geregeltes System, zur Ansteuerung der Bremse verwendet werden kann. Es ist jedoch auch denkbar, dass eine ausreichend gute Ansteuerung mit einem MOSFET bzw. zwei MOSFETs möglich ist. Weiterhin muss die Software in allen beschriebenen Fällen den aktuellen Zustand der Bremse (offen vs. geschlossen) kennen; entweder aus den entsprechenden Kenndaten der Bremse und/oder aus gemessenen Strom- und/oder Spannungswerten der Bremse.

Bezugszeichenliste

| | |
|---|---|
| 2 | Elektromotor |
| 4 | Drehwelle |
| 6 | Befestigungsadapter (für Haltebremse) |
| 8 | Bohrung |
| 10 | Haltebremse (Aktuator) |
| 12 | Aufnahmebohrung |
| 14 | Arretierungsschraube |
| 16 | Kupplungsfortsatz |
| 18 | Kupplungskreuz |
| 20 | Strom/Signalkabel (für den Elektromotor) |
| 22 | Strom/Signalkabel (für die Haltebremse) |
| 24 | Kupplungsanker |
| 26 | Gehäuse (der Haltebremse) |
| 28 | Brems- bzw. Kupplungsscheibe |
| 30 | Schwungscheibe |
| 31 | Permanentmagnet |
| 32 | Spule |
| 33 | Feder |
| 34 | PWM-Spannungssignal (angelegt an der Spule) |
| 35 | Luftspalt |
| 36 | Effektivstrom (durch die Spule) |
| 38 | Durch Stromsignal der Spule angezeigtes Ereignis |
| 40 | Zeitpunkt, an dem die Spannung der Spule auf 0V gesetzt wird |
| 42 | Durch Stromsignal der Spule angezeigtes 2. Ereignis |
| T1 | Normal sperrender p-Kanal MOSFET |
| T2 | Normal sperrender n-Kanal MOSFET |
| T3 | Normal sperrender p-Kanal MOSFET |
| T4 | Normal sperrender n-Kanal MOSFET |
| D1-D4 | Diode |

**Patentansprüche**

1. Vorrichtung zum Steuern eines elektromagnetischen Aktuators, insbesondere einer elektromagnetischen Haltebremse, wobei der Aktuator einen ferromagnetischen Anker, einen Stator, einen Permanentmagneten zum Erzeugen eines ersten Magnetfelds und mindestens eine Spule zum Erzeugen eines zweiten Magnetfelds aufweist und der Anker durch das erste Magnetfeld zum Stator bewegbar und reibschlüssig verbindbar bzw. arretierbar ist, wobei die mindestens eine Spule derart ausgebildet und/oder angeordnet ist, die Richtung des zweiten Magnetfelds entgegen der Richtung des ersten Magnetfelds auszubilden, um den Anker vom Stator zu lösen,
**dadurch gekennzeichnet, dass**
die Vorrichtung derart ausgebildet ist, ein pulsweitenmoduliertes Steuersignal für die mindestens eine Spule zum Steuern des Aktuators zu erzeugen und derart zu modulieren, dass der Impuls, insbesondere die Geschwindigkeit, des Ankers beim Auftreffen auf und/oder beim Lösen vom Stator minimiert wird.

2. Vorrichtung nach Anspruch 1,
**dadurch gekennzeichnet, dass**
die Vorrichtung derart ausgebildet ist, das Steuersignal mit einem vorbestimmten Modulationsmuster und/oder abhängig von einer gemessenen Stromstärke in der mindestens einen Spule zu modulieren und den Tastgrad des Steuersignals vor dem Auftreffen des Ankers auf den Stator zu reduzieren und/oder vor dem Lösen des Ankers vom Stator zu erhöhen mit dem Ziel, die Auftreff- bzw. Lösegeschwindigkeit zu minimieren.

3. Vorrichtung nach Anspruch 1 oder 2,
**dadurch gekennzeichnet, dass**
die Vorrichtung derart ausgebildet ist, ein vorbestimmtes Steuersignal abhängig von den Kenndaten des Aktuators zu erzeugen.

4. Vorrichtung nach Anspruch 1 oder 2,
**dadurch gekennzeichnet, dass**
die Vorrichtung derart ausgebildet ist, eine Veränderung einer Stromstärke in der mindestens einen Spule innerhalb einer Periodendauer des Steuersignals zu messen, abhängig von der Veränderung den Abstand zwischen Anker und Stator und die Geschwindigkeit des Ankers zu bestimmen und das Steuersignal abhängig von dem Abstand zwischen Anker und Stator und der Geschwindigkeit des Ankers zu modulieren.

5. Vorrichtung nach Anspruch 1 oder 2,
**dadurch gekennzeichnet, dass**
die Vorrichtung derart ausgebildet ist, nach einem Abschalten des Steuersignals zuerst eine sinkende Stromstärke und eine nachfolgende steigende Stromstärke in der mindestens einen Spule zu messen, ab einem Zeitpunkt A der gemessenen steigenden Stromstärke das Steuersignal mit einem maximal möglichen Tastgrad solange zu erzeugen, bis die Stromstärke konstant ist oder sinkt, und ab einem Zeitpunkt B der gemessenen konstanten bzw. sinkenden Stromstärke den Tastgrad des Steuersignals zu reduzieren.

6. Vorrichtung nach Anspruch 4 oder 5,
**dadurch gekennzeichnet, dass**
die Vorrichtung derart ausgebildet ist, nach dem Zeitpunkt B eine erneut steigende Stromstärke zu messen und die Schritte ab dem Zeitpunkt A und B zu wiederholen.

7. Vorrichtung nach Anspruch 5,
**dadurch gekennzeichnet, dass**
die Vorrichtung derart ausgebildet ist, nach einem Erzeugen des Steuersignals zuerst eine steigende Stromstärke und eine nachfolgende sinkende Stromstärke in der mindestens einen Spule zu messen, ab einem Zeitpunkt C der gemessenen sinkenden Stromstärke das Steuersignal mit einem minimal möglichen Tastgrad solange zu erzeugen, bis die Stromstärke konstant ist oder steigt, und ab einem Zeitpunkt D der gemessenen konstanten bzw. steigenden Stromstärke den Tastgrad des Steuersignals zu erhöhen.

8. Vorrichtung nach Anspruch 4, 5 und 7,
**dadurch gekennzeichnet, dass**
die Vorrichtung derart ausgebildet ist, nach dem Zeitpunkt D eine erneut sinkende Stromstärke zu messen und die Schritte ab dem Zeitpunkt C und D zu wiederholen.

9. Vorrichtung nach einem der Ansprüche 1 bis 8,
**gekennzeichnet durch**
einen oder zwei MOSFETs zum Erzeugen des Steuersignals, insbesondere durch eine H-Brücke aus höchstens vier MOSFETs.

10. Verfahren zum Steuern eines elektromagnetischen Aktuators, insbesondere einer elektromagnetischen Haltebremse, wobei der Aktuator einen ferromagnetischen Anker, einen Stator, einen Permanentmagneten zum Erzeugen eines ersten Magnetfelds und mindestens eine Spule zum Erzeugen eines zweiten Magnetfelds aufweist und der Anker durch das erste Magnetfeld zum Stator bewegbar und reibschlüssig verbindbar bzw. arretierbar ist, wobei die mindestens eine Spule derart ausgebildet und/oder angeordnet ist, die Richtung des zweiten Magnetfelds entgegen der Richtung des ersten Magnetfelds auszubilden, um den Anker vom Stator zu lösen,
**gekennzeichnet durch**
folgenden Schritt:

- Erzeugen und Modulieren eines pulsweitenmodulierten Steuersignals für die mindestens eine Spule zum Steuern des Aktuators, wobei das Steuersignal ein Modulationsmuster aufweist, das den Impuls, insbesondere die Geschwindigkeit, des Ankers beim Auftreffen auf und/oder beim Lösen vom Stator minimiert.

11. Verfahren nach Anspruch 10,
**gekennzeichnet durch**

- Modulieren des Steuersignals mit einem vorbestimmten Modulationsmuster und/oder abhängig von einer gemessenen Stromstärke in der mindestens einen Spule,
- Reduzieren des Tastgrads des Steuersignals vor dem Auftreffen des Ankers auf den Stator und/oder
- Erhöhen des Tastgrads des Steuersignals vor dem Lösen des Ankers vom Stator.

12. Verfahren nach Anspruch 10 oder 11,
**gekennzeichnet durch**

- Erzeugen eines vorbestimmten Steuersignals abhängig von den Kenndaten des Aktuators.

13. Verfahren nach Anspruch 10 oder 11,
**gekennzeichnet durch**

- Messen einer Veränderung einer Stromstärke in der mindestens einen Spule innerhalb einer Periodendauer des Steuersignals,
- Bestimmen eines Abstands zwischen Anker und Stator und einer Geschwindigkeit des Ankers abhängig von der Veränderung, und
- Modulieren des Steuersignals abhängig von dem Abstand zwischen Anker und Stator und der Geschwindigkeit des Ankers.

14. Verfahren nach Anspruch 10 oder 11,
**gekennzeichnet durch**
die folgenden Schritte beim Arretieren des Ankers:

a) Abschalten des Steuersignals,
b) Messen einer sinkenden Stromstärke und einer nachfolgenden steigenden Stromstärke in der mindestens einen Spule,
c) ab einem Zeitpunkt A der gemessenen steigenden Stromstärke, Erzeugen des Steuersignals mit einem maximal möglichen Tastgrad, bis die gemessene Stromstärke konstant ist oder sinkt,
d) ab einem Zeitpunkt B der gemessenen konstanten bzw. sinkenden Stromstärke, Reduzieren des Tastgrads des Steuersignals, und
e) Wiederholen der Schritte b) bis d)

15. Verfahren nach Anspruch 10, 11 und 14,
**gekennzeichnet durch**
die folgenden Schritte beim Lösen des Ankers:

a) Erzeugen des Steuersignals,
b) Messen einer steigenden Stromstärke und einer nachfolgenden sinkenden Stromstärke in der mindestens einen Spule,
c) ab einem Zeitpunkt C der gemessenen sinkenden Stromstärke, Erzeugen des Steuersignals mit einem minimal möglichen Tastgrad, bis die gemessene Stromstärke konstant ist oder steigt,
d) ab einem Zeitpunkt D der gemessenen konstanten bzw. steigenden Stromstärke, Erhöhen des Tastgrads des Steuersignals, und
e) Wiederholen der Schritte b) bis d)

16. Computer-lesbares Medium mit einem Programmcode, der derart angepasst ist, alle Verfahrensschritte nach einem der Verfahrensansprüche 10 bis 15 durchzuführen, wenn der Programmcode auf einem Computer ausgeführt wird.

17. Einrichtung mit Mitteln zur Durchführung der Schritte des Verfahrens nach einem der Ansprüche 10 bis 15.

18. Einrichtung nach Anspruch 17, wobei die Einrichtung als eingebettetes System oder eingebettete Schaltung ausgebildet ist.

**Fig. 1**

**Fig. 2**

A

22

20

14

10

18

6

16

A

**Fig. 3**

22

8

26

24

20

2

30

16

18

A–A

6

4

28

14

10

**Fig. 4**

Luftspalt

**Fig. 5**

**Fig. 6**

**Fig. 7**

**Fig. 8**

**Europäisches Patentamt**
**European Patent Office**
**Office européen des brevets**

## EUROPÄISCHER RECHERCHENBERICHT

Nummer der Anmeldung

EP 17 19 4676

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2007 200978 A (FUJI XEROX CO LTD) 9. August 2007 (2007-08-09) | 1-3, 9-12,16, 17 | INV. H01F7/18 H01F7/122 |
| Y | * Abbildungen 1-3 * <br> * Absätze [0014], [0017] * <br> ----- | 1-4,8-18 | F16D55/02 F16D63/00 H01F7/16 |
| Y | EP 1 848 898 A1 (KENDRION BINDER MAGNETE GMBH [DE]) 31. Oktober 2007 (2007-10-31) <br> * Abbildung 1 * <br> * Absätze [0033] - [0043]; Abbildung 1 * <br> ----- | 1-18 | |
| Y | DE 699 12 877 T2 (SIEMENS VDO AUTOMOTIVE CORP [US]) 2. September 2004 (2004-09-02) <br> * Abbildungen 1-10 * <br> * Absätze [0002], [0034], [0035], [0040] * <br> ----- | 1-18 | |
| Y | DE 10 2012 008547 A1 (SEW EURODRIVE GMBH & CO [DE]) 20. Dezember 2012 (2012-12-20) <br><br> * Absätze [0006], [0009], [0014] * <br> ----- | 1-3, 9-12, 16-18 | RECHERCHIERTE SACHGEBIETE (IPC) |
| Y | DE 10 2011 102060 A1 (SVM SCHULTZ VERWALTUNGS GMBH & CO KG [DE]) 23. August 2012 (2012-08-23) <br> * Abbildungen 1-5 * <br> * Absätze [0057] - [0060] * <br> ----- | 1,2, 9-11, 16-18 | H01F F16D |

Der vorliegende Recherchenbericht wurde für alle Patentansprüche erstellt

| Recherchenort | Abschlußdatum der Recherche | Prüfer |
|---|---|---|
| München | 1. März 2018 | Weisser, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 4676

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2018

| Im Recherchenbericht angeführtes Patentdokument | Datum der Veröffentlichung | Mitglied(er) der Patentfamilie | Datum der Veröffentlichung |
|---|---|---|---|
| JP 2007200978 A | 09-08-2007 | KEINE | |
| EP 1848898 A1 | 31-10-2007 | AT 392566 T<br>CN 101115937 A<br>EP 1848898 A1<br>JP 2008530967 A<br>US 2008136279 A1<br>WO 2006087017 A1 | 15-05-2008<br>30-01-2008<br>31-10-2007<br>07-08-2008<br>12-06-2008<br>24-08-2006 |
| DE 69912877 T2 | 02-09-2004 | DE 69912877 D1<br>DE 69912877 T2<br>EP 0959479 A2<br>JP 2000060174 A<br>US 5991143 A | 24-12-2003<br>02-09-2004<br>24-11-1999<br>25-02-2000<br>23-11-1999 |
| DE 102012008547 A1 | 20-12-2012 | KEINE | |
| DE 102011102060 A1 | 23-08-2012 | DE 102011102060 A1<br>EP 2511918 A1 | 23-08-2012<br>17-10-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69912877 T2